# EUROPEAN PATENT SPECIFICATION

(11) **EP 4 612 422 B1**
(45) Date of publication and mention of the grant of the patent: **15.04.2026**
(21) Application number: 24701686.8
(22) Date of filing: 23.01.2024
(51) Int. Cl.: F16H 25/06, F16C 33/58, H02K 7/08, H02K 7/116

(54) **HARMONIC WAVE REDUCTION AND BEARING ASSEMBLY AND ELECTRIC MOTOR ARRANGEMENT**
HARMONISCHE UNTERSETZUNGS- UND LAGERANORDNUNG UND ELEKTROMOTORANORDNUNG
ENSEMBLE PALIER ET DE RÉDUCTION D'ONDES HARMONIQUES ET AGENCEMENT DE MOTEUR ÉLECTRIQUE

(43) Date of publication of application: 10.09.2025
(73) Proprietor: OMS Antriebstechnik GmbH, 36219 Cornberg (DE)
(72) Inventor: VOLAK, Miroslav, 04023 Kosice (SK)
(74) Representative: Seemann & Partner Patentanwälte mbB
(86) International application number: PCT/EP2024/051560
(87) International publication number: WO 2025/157397

(56) References cited:
- JP-A- 2010 019 286
- JP-A- 2013 199 938
- JP-A- H0 874 947
- JP-A- S6 293 565

## Description

The invention relates to a harmonic wave reduction and bearing assembly and electric motor arrangement having radial or radiaxial bearings and one or more harmonic wave reduction stages.

Reduction assemblies are also known as gearboxes. Such gearboxes translate a fast rotation of a shaft on the input side into a slow rotation at enhanced torque on the output side of the gearbox. Many technical applications require reduction action but are faced with the problem that commonly known gearboxes in combination with bearings are prohibitively large. One such field of technology is robotics, which has a particularly strong need for miniaturization combined with robust and precise rotary speed reduction. Another field of technology, in which the invention can be used, is automotive, especially electric cars and electric wheels.

The translation of the rotational speed from fast to slow is sometimes done using a harmonic wave type reduction action known in the art.

Gearboxes employing a harmonic wave type reduction action have three concentric rings. The innermost ring and outermost ring have races facing each other whose shape deviate from circular shapes. The innermost race has a small number Nᵢₙ of valleys and peaks, in particular at least one of each, whereas the outermost race has a much larger number *Nₒᵤₜ* of valleys and peaks with *Nₒᵤₜ > Nᵢₙ*, the gear ratio being equal to the quotient *(Nₒᵤₜ - Nᵢₙ)*/*Nᵢₙ.* The central of the three rings provides cages for rolling elements that are caught between the innermost race and the outermost race. The peaks and valleys are shaped to ensure that, within production tolerances, the rolling elements are always contacted by both the innermost race and the outermost race at the same time, thus ensuring a harmonic wave type movement of the rolling elements when the innermost, i.e., input side, ring is driven to turn.

Either the outermost ring or the central ring may be affixed to a supporting structure, leaving the other ring, that is, the central ring or, respectively, the outermost ring, to constitute the output of the gearbox. The choice of outermost ring and central ring as output also determines whether the output will rotate in the same direction or in the opposite direction to the input shaft.

Commonly known gearboxes providing harmonic wave type reduction action are not capable of or ill-suited to bearing radial forces and are therefore usually used in combination with external or additional radial bearings. Most such known gearboxes are combined with three or more radial bearings for the dual purpose of bearing radial forces and sealing the gearbox from both sides. This is especially the case, since this stepping down of the rotational speed from the input side to the output side is accompanied by an equally large stepping up in torque. Radial bearings with concentric rings interposed with concentric rings of rolling elements are commonly used to take up radial forces while allowing rotational movement of rotating parts connected with the inner ring of the bearing around a common central axis of the concentric rings.

This combination makes known gearboxes quite large and cumbersome. There is demand for powerful and price friendly gearboxes mostly for new robotics, general automation, medical devices, security and defense systems, new automated guided vehicles and electric vehicles. Each contribution to price optimization and size and weight reduction is welcome.

EP 3 135 954 A1 discloses a so-called reduction bearing, merging the functionality of radial bearings with that of a gearbox. It exhibits at least three concentric rings, an inner ring, a center ring and an outer ring, between which bearings are arranged, which consist of rings of rolling elements in rolling element cages, in effect constituting a concentric radial double-bearing. Each concentric ring further exhibits an extension section, where a harmonic wave-type reduction action is transmitted between the inner ring extension and the outer ring extension. One ring is connectable to a rotor of an electric motor, another ring is connectable to an output and the third ring is connectable to a stator of the electric motor. In effect, this reduction bearing provides a reduction action while simultaneously bearing radial forces.

JP S62 93565 A discloses a reduction gear with two radial bearings inputward and outputward of a reduction stage having three concentric rings, wherein bearing rings of the two radial bearings rotate with different ones of the reduction stage rings.

JP 2013 199938 A discloses another reduction gear with an input side bearing and an output side bearing sandwiching a central reduction stage.

JP 2010 019286 A discloses a staged reduction device having two reduction stages coupled in series. JP H08 74947 A discloses a planetary gear device coupled to an output shaft motor.

It is an object of the present invention to improve over the known design with respect to simplicity, cost effectiveness, durability and performance.

This object is achieved with a harmonic wave reduction and bearing assembly, comprising an input side radial or radiaxial bearing and an output side radial or radiaxial bearing in axial alignment with the input side bearing on a common central axis, the input side bearing and the output side bearing each having a plurality of rolling elements positioned between an outer bearing ring and an inner bearing ring, the assembly further comprising a harmonic wave reduction stage located axially in between the input side bearing and the output side bearing, the reduction stage performing a wave-type reduction action and having an inner reduction stage ring, a central reduction stage ring and an outer reduction stage ring that are concentric with each other as well as with the input side bearing and the output side bearing, wherein the inner reduction stage ring rotates with the inner bearing ring of the input side bearing, the central reduction stage ring rotates with the inner bearing ring of the output side bearing and the outer reduction stage ring is coupled to the outer bearing rings of both the input side bearing and the output side bearing, wherein the inner reduction stage ring and the outer reduction stage ring are formed as extensions of the inner bearing ring and the outer bearing ring of the input side bearing, respectively, and the central reduction stage ring is formed as an extension of the inner bearing ring of the output side bearing, wherein the extensions of the inner and outer bearing rings of the input side bearing and the inner bearing ring of the output side bearing radially mesh with each other to form the reduction stage..

In contrast to the concentric double bearing of EP 3 135 954 A1, which necessitated very small production tolerances and provided an inherent axial asymmetry, the bearing taking place on one side of the reduction stage, the harmonic wave reduction and bearing assembly of the present disclosure is well-balanced by utilizing two common radial or radiaxial bearings, between which the reduction stage is sandwiched. This arrangement also provides for good sealing of the gearbox. The use of commonly known radial or radiaxial bearings is cost-effective and provides the gearbox with simplicity and good durability. Since the reduction stage is protected on either side, axially, from radial forces, bending moments acting on the reduction stage are minimized, thus ensuring that the concentric rings of the reduction stage stay in concentric alignment with each other and the rolling elements of the reduction stage are not exposed to excessive forces at certain places along the circumference of the ring of rolling elements. Rolling elements may be of spherical shape, cylindrical shape, or other suitable shape allowing for rolling according to the setup and orientation of the race surfaces of the reduction stage.

In embodiments, the inner reduction stage ring has a first race surface having one or more peaks and the outer reduction stage ring has a second race surface facing the first race surface and having a plurality of grooves, the number of grooves being greater than the number of peaks, wherein the central reduction stage ring has structures defining a plurality of channels containing rolling elements held movable in the direction of the channel and in contact with both the first race surface and the second race surface, wherein the number of channels in the central reduction stage ring equals the difference between the number of grooves and the number of peaks. The gear ratio as determined by the quotient of the number of rolling elements and the number of peaks on the first race surface.

The channels need not be fully closed inside the central reduction stage ring, but may be open to one side, with the opening being closed by an opposing surface of, for example, the inner bearing ring of the input side bearing. Furthermore, the number of channels may be doubled if the rolling elements are provided in pairs for increased robustness. In this case, the number of pairs of channel count as the number of channels being equal to the difference between the number of grooves and the number of peaks.

In embodiments, the first race surface, the second race surface and the channels are oriented such that, when in action, the rolling elements follow a radially oriented harmonic wave pattern, an axially oriented harmonic wave pattern or a radiaxially oriented harmonic wave pattern tilted at an oblique angle with respect to both the radial and the axial orientations. An oblique angle is to be understood as an angle between, but not including the radial orientation and the axial orientation. In the case of an axial orientation of the harmonic wave pattern, the central ring will have a disk shape or disk like shape, wherein the front face of the disc in the axial direction bears the first race surface, the peaks and valleys defining different amplitudes in the axial direction. The second race surface is oriented facing the first race surface, its peaks and valleys likewise being oriented to provide a profile whose peaks are at a different axial position closer to the first race surface than its valleys.

According to the invention, the inner reduction stage ring and the outer reduction stage ring are formed as extensions of the inner bearing ring and the outer bearing ring of the input side bearing, respectively, and the central reduction stage ring is formed as an extension of the inner bearing ring of the output side bearing, wherein the extensions of the inner and outer bearing rings of the input side bearing and the inner bearing ring of the output side bearing radially mesh with each other to form the reduction stage.

This provides a compact gearbox with few separate parts that have to be assembled and connected with each other, thereby providing few weak points.

In embodiments wherein the assembly is especially robust and well-sealed, the input side bearing, the reduction stage and the output side bearing are housed in a shared outer ring. In other words, the outer rings of the input side bearing, the reduction stage and the output side bearing are connected with each other such as to form a common housing. This requires intricate machining of the inside of the housing, or can be achieved by combining and converting the individual outer rings into the common housing by means such as welding or soldering.

The gear ratio of the assembly may be enhanced with the assembly having two or more reduction stages coupled to each other in series from an input side reduction stage to an output side reduction stage, each reduction stage being sandwiched between an input side bearing and an output side bearing, the coupling in series being realized such that, in a pair of coupled reduction stages, the central ring of an inputward reduction stage of the pair drives the inner ring of an outputward reduction stage of the pair. The gear ratios of the individual reduction stages multiply. For example, such a combination of two reduction stages each having a gear ratio of 10:1 will result in an overall gear ratio of 100:1, meaning that 100 revolutions of the input shaft will be stepped down to one revolution of the output ring. Since the torque is converted inverse proportional to the speed of rotation, it is enhanced by a factor of 100 in this example. Each of the two, three or more reduction stages of the assembly is sandwiched between two bearings, thus decoupling subsequent stages from each other with respect to radial and/or axial forces.

Adjacent reduction stages of the pair share a common bearing between each other in embodiments of such stacked reduction stages. In other words, the output side bearing of the inputward reduction stage is at the same time the input side bearing of the outputward reduction stage of the pair. This reduces the number of radio or radiaxial bearings and the size and complexity of the assembly.

The present objective is also achieved with an electric motor arrangement comprising an electric motor and a harmonic wave reduction and bearing assembly according to claim 1, wherein the outer bearing ring of an input side radial or radiaxial bearing of the harmonic wave reduction and bearing assembly is connected with a housing or a stator of the electric motor and the inner bearing ring of the input side bearing is connected to a rotor of the electric motor. The electric motor arrangement whereby embodies the same characteristics, advantages and features as the above-described harmonic wave reduction and bearing assembly.

In an embodiment, a radial or radiaxial bearing of the electric motor is at the same time the input side bearing of the harmonic wave reduction and bearing assembly connected to the electric motor. The radial or radiaxial bearing of the electric motor is located next to or at the output of the motor and abutting the reduction stage of the assembly.

The invention is described below, without restricting the general intent of the invention, based on exemplary embodiments, wherein reference is made expressly to the drawings with regard to the disclosure of all details according to the invention that are not explained in greater detail in the text. The drawings show in:
- Fig. 1A - 1D: schematic representations of a first embodiment of a harmonic wave reduction and bearing assembly,
- Fig. 2: schematic representations of harmonic wave type reduction stages with different gear ratios,
- Fig. 3A - 3B: schematic representations of a second embodiment of a harmonic wave reduction and bearing assembly, which is not part of the invention,
- Fig. 4A - 4B: schematic representations of a third embodiment of a harmonic wave reduction and bearing assembly,
- Fig. 5A - 5D: schematic representations of a fourth embodiment of a harmonic wave reduction and bearing assembly, and
- Fig. 6A - 6B: schematic representations of an embodiment of an electric motor arrangement.

In the drawings, the same or similar types of elements or respectively corresponding parts are provided with the same reference numbers in order to prevent the item from needing to be reintroduced.

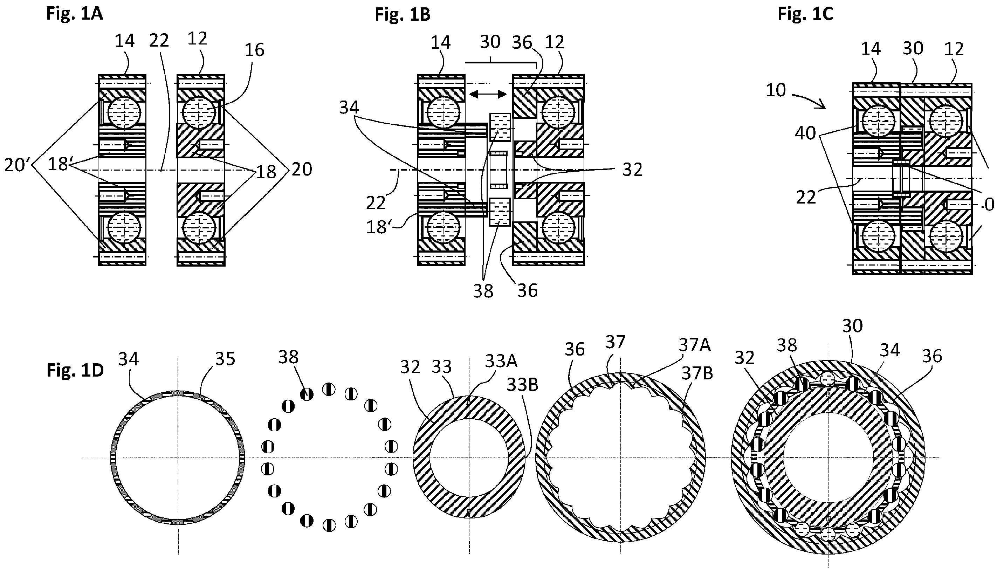

Figs. 1A to 1D show schematic representations of a first embodiment of a harmonic wave reduction and bearing assembly 10, progressing in level of detail from Fig. 1A to Fig. 1C, and the separated constituent parts of a harmonic wave type reduction stage 30 in Fig. 1D. In all figures showing gearboxes, the input of the gearbox displayed on the right side, the output on the left side.

Fig. 1A shows two radial bearings 12, 14 of the ball bearing type aligned on a common central axis 22, without a reduction stage. Input side bearing 12 comprises an inner bearing ring 18 and, concentric to the inner bearing ring 18, an outer bearing ring 20. Rolling elements 16 are located between a bearing race of the inner bearing ring 18 and a bearing race of the outer bearing ring 20. Likewise, output side bearing 14 comprises concentric inner bearing ring 18', outer bearing ring 20' and rolling elements 16 located between respective bearing races thereof. The bearing rings have screw holes therein (without reference numbers) for assemblage.

Fig. 1B additionally shows a disassembled harmonic wave reduction stage 30 located between input side radial bearing 12 and output side radial bearing 14 and in axial alignment with both. The harmonic wave reduction stage 30 comprises an inner reduction stage ring 32, a central reduction stage ring 34, an outer reduction stage ring 36 and a plurality of rolling elements 38. The inner reduction stage ring 32 is connected to the inner bearing ring 18 of input side bearing 12. The central reduction stage ring 34 is connected to the inner bearing ring 18' of output side bearing 14. The outer reduction stage ring 36 is connected to the outer bearing ring 20 of input side bearing 12. The rolling elements 38 are located at a radial distance from central axis 22 so as to coincide with the central reduction stage ring 34, which provides channels to accommodate the rotating elements 38. The channels of the central reduction stage ring 34 may be closed in axial direction, or open, to be closed when brought into direct opposition to the opposing surface of the inner bearing ring 18 of input side bearing 12. In both cases, the rolling elements 38 have only a freedom of movement in the radial direction inside their respective channels.

In this first embodiment, the inner, central and outer reduction stage rings 32, 34, 36 are provided as extensions of the respective inner and outer bearing rings 18, 18', 20 of the input side bearing and 12 and the output side bearing 14, in the above described relationship.

Fig. 1C shows the assembled harmonic wave reduction and bearing assembly 10 of the first embodiment. As can be seen, the three rings of the reduction stage 30 and the rolling elements 38 mesh tightly into one another, providing a very compact and balanced gearbox with good radial bearing functionality from both the input side and the output side. The extensions of the various bearing rings that form the reduction stage 30 require machining, but there are only very few parts that need to be connected, providing for a sturdy product.

In addition, Fig. 1C shows seals 40 applied from the outside to the gaps between inner and outer bearing rings 18, 20 of the input side bearing 12 and the inner and outer bearing rings 18', 20' of the output side bearing 14, respectively, as well as an internal seal 40 towards the central axis 22, sealing the internal gap between the extension of inner bearing ring 18 of input side bearing 12 and the inner bearing ring 18' of output side bearing 14. This latter seal 40 is accommodated in two slits within the faces of inner bearing rings 18, 18' facing each other, as can be better seen in Fig. 1B.

Fig. 1D shows schematic illustrations of constituent parts of harmonic wave reduction stage 30, lined up on a common central axis. From left to right, the central reduction stage ring 34 is displayed having eighteen channels 35 for the accommodation of eighteen rolling elements 38 displayed next to central reduction stage ring 34. The next item is the inner reduction stage ring 32. Reduction stage ring 32 has a non-circular circumferential first race surface 33, which in this embodiment has two peaks 33A located at the top and the bottom of the depiction and, consequently, two valleys 33B on the left and right. The shape of the first race surface 33 is an ellipse or close to an ellipse. To the right of the inner reduction stage ring 32, Fig. 1D shows outer reduction stage ring 36 having an inward facing second race surface 37 with twenty grooves 37B, each separated from its neighbouring grooves by separators 37A.

The rightmost part of Fig. 1D shows the reduction stage 30 with its constituent parts in an assembled state. As can be seen, each of the rolling elements 38 is accommodated inside a channel 35 of the central reduction stage ring 34, allowing movement relative to the central reduction stage ring 34 only in the radial direction. Upon rotation of the inner reduction stage ring 32, however, the turning of its peaks 33A forces the rolling elements 38 into the respective grooves 37B of the outer reduction stage ring 36, thereby forcing the central reduction stage ring 34 to slowly rotate with respect to outer reduction stage ring 36. With each passing peak 33A, a rolling element 38 will be guided into the next groove 37B from the one it had just been in. This harmonic wave like pattern of movement of the rolling elements 38 gives rise to the reduction of rotational speed from the input side to the output side. The gear ratio is determined by the ratio of the number of rolling elements 38 (18) to the number of peaks 33A (2), i.e., in this case 9:1.

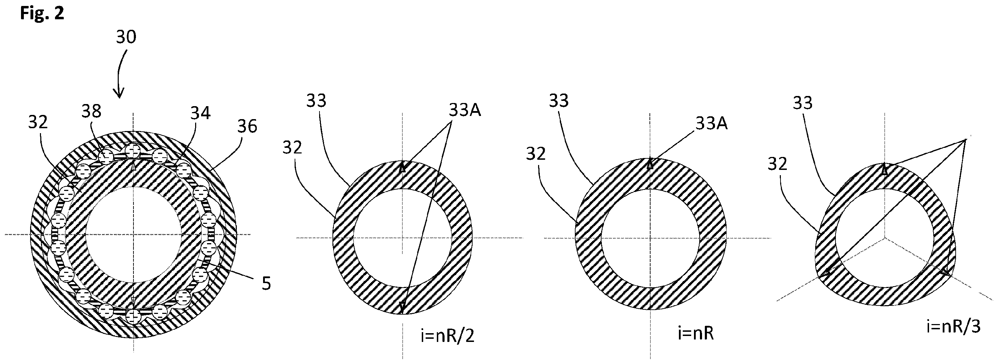

To illustrate this further, Fig. 2 provides a schematic illustration of how to achieve different gear ratios. The leftmost part of Fig. 2 shows an assembled reduction stage 30 according to Fig. 1D, i.e., with a gear ratio of 9:1. To the right, the respective inner reduction stage ring 32 is shown with the two peaks 33A on its first race surface 33 clearly indicated. The gear ration i *= nR*/*2* is indicated with *nR* being the number of rolling elements 38 and 2 being the number of peaks 33A.

Next to this embodiment, an inner reduction stage ring 32 having only one peak 33A is displayed. The gear ratio in this case is *i = nR.* If this inner reduction stage ring 32 were to be used inside the reduction stage 30 shown in the leftmost place in Fig. 2, either the number of rolling elements 38 and channels 35 in the central reduction stage ring 34 would have to be increased to 19, providing a gear ration of 19:1 , or the number of grooves 37B in the outer reduction stage ring 36 would have to be decreased by 1, providing a gear ratio of 18:1.

In the rightmost example in Fig. 2, the inner reduction stage ring 32 has three peaks 33A spaced 120° apart. The resulting gear ratio is then i = *nR*/*3.* Used in the reduction stage 30 displayed left in Fig. 2, either the number of rolling elements 38 and channels 35 would have to be reduced to 17 or the number of grooves 37B would have to be increased to 21. In the former case, the gear ratio would be 17:3, i.e., approx. 5,667:1, in the latter case it would be 6:1.

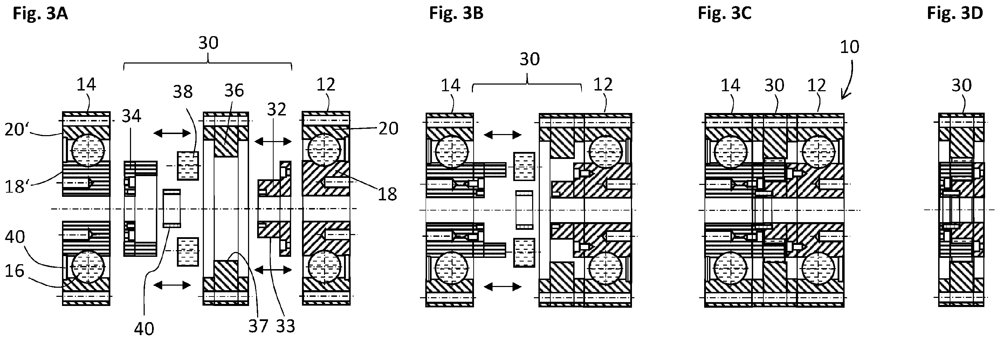

Fig. 3A to 3D show a schematic illustration of a second embodiment of a harmonic wave reduction and bearing assembly 10 **,** which does not form part of the present invention, in various stages of assembly progressing from Fig. 3A to Fig. 3C. Input side bearing 12 and output side bearing 14 are preassembled.

In this case, in contrast to the first embodiment of Fig. 1, the reduction stage 30 is made of separate inner, central and outer reduction stage rings 32, 34, 36 that are aligned and assembled step by step. Progressing from Fig. 3A to Fig. 3B, first the input side components of reduction stage 30 are assembled and connected to their counterparts of the input side bearing 12 by screws, such as the screws shown in screw holes between inner reduction stage ring 32 and inner bearing ring 18 of input side bearing 12 (Fig. 3B). Likewise, outer reduction stage ring 36 is connected with outer bearing ring 20 of input side bearing 12. At this time, central reduction stage ring 34 is connected with inner bearing ring 18' of the output side bearing 14 with a plurality of screws as well.

Next, as shown in Fig. 3C, the rolling elements 38 are placed inside their respective channels 35 of central reduction stage ring 34, likewise the internal seal 40 is placed inside its respective accommodating slit in either the inner reduction stage ring 32 or the central reduction stage ring 34, and the components aligned axially, brought into contact and connected, e.g. by screwing them together. Fig. 3C displays the finished harmonic wave reduction and bearing assembly 10 of the second embodiment, whereas Fig. 3D displays the reduction stage 30 of this embodiment without the bearings 12, 14.

As can be seen in Figs. 3C and 3D, the reduction stage 30 has additional structures on its input side and its output side needed for connecting the reduction stage 30 components to the input side bearing 12 and the output side bearing components 14 that are missing from the first embodiment depicted in Fig. 1C, in which the rings 32, 34, 36 of the reduction stage 30 were built as extensions of the rings 18, 18', 20 of the input side and output side bearings 12, 14. This difference makes the second embodiment slightly longer than the first embodiment. On the other hand, the components of the second embodiment are easier to produce than the extensions of the rings of the bearings, which makes the second embodiment more cost effective and easier to repair in case of a failure of a single part. However, because of the higher number of connection points, i.e., points of failure, given equivalent sizes, the second embodiment is slightly less robust than the first embodiment.

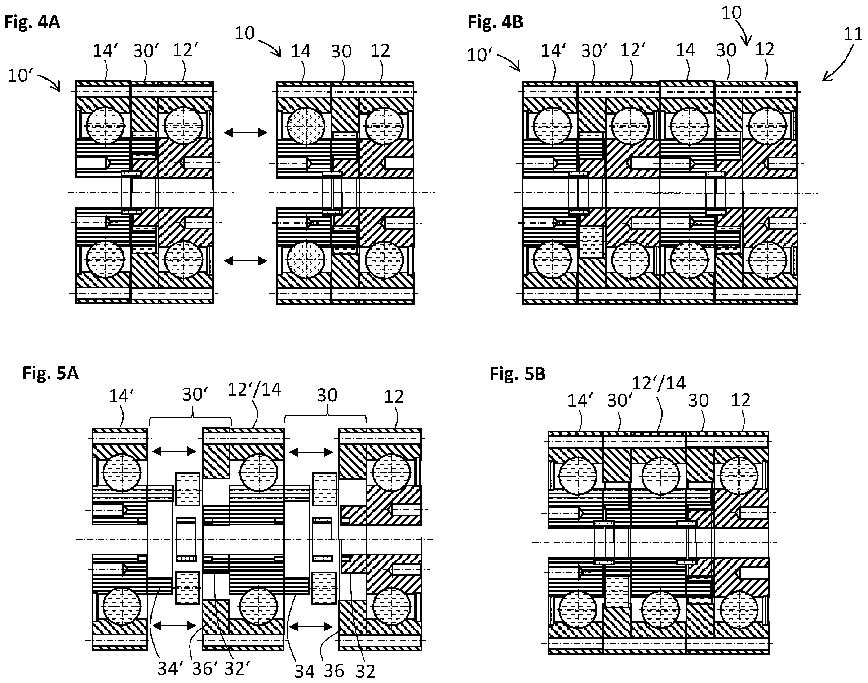

The third embodiment of harmonic wave reduction and bearing assemblies shown in Figs. 4A and 4B illustrates the principle of stacking two single-stage reduction and bearing assemblies 10, 10' in series, in axial alignment with each other, as illustrated by the double-headed arrows between the two separate assemblies 10, 10' in Fig. 4A. Fig. 4B shows the two-stage harmonic wave reduction and bearing assembly 11, assembled out of inputward harmonic wave reduction and bearing assembly 10 and outputward harmonic wave reduction and bearing assembly 10', wherein the assemblies 10, 10' are connected such that the inner bearing rings and the outer bearing rings of the two radial bearings 14, 12' brought into contact are connected to each other, respectively. By this, the outer bearing rings 20 are joined into a common housing and the central reduction stage ring 34 of inputward assembly 10 drives the inner reduction stage ring 32 of outputward assembly 10'. If both harmonic wave reduction and bearing assemblies 10, 10' each have gear ratios of 9:1, for example, as in the case of the embodiment of Fig. 1, the combined gear ratio is 81:1. This principle can be extended by adding more stages in the same manner. Since torque increases by the same factor as the speed of rotation decreases, a robust radial bearing is advantageous in such instances.

Figs. 5A and 5B show an alternative fourth embodiment of a two-stage harmonic wave reduction and bearing assembly 11', wherein, in contrast to the third embodiment, the two reduction stages 30, 30' are built as extensions of three radial bearings 12, 12'/14 and 14'. The middle bearing 12'/14 doubles as output side bearing 14 of inputward reduction stage 30 and as input side bearing 12' of outputward reduction stage 30' and bears extensions for the central reduction stage ring 34 of the inputward reduction stage 30 and of the inner and outer reduction stage rings 32', 36' of the outputward reduction stage 30'. The overall construction of each stage 30, 30' is similar to the one shown in Figs. 1A to 1C. Inner reduction stage ring 32 and outer reduction stage ring 36 of the inputward reduction stage 30 are built as extensions of the input side bearing's 12 inner and outer bearing rings 18, 20, respectively, whereas central reduction stage ring 34' of the outputward reduction stage 30' is built as an extension of inner bearing ring 18' of the output side bearing 14' of the outputward reduction stage 30'. This assembly makes use of one fewer radial bearing than the one shown in Figs. 4A and 4B and thus lends itself to a more compact design.

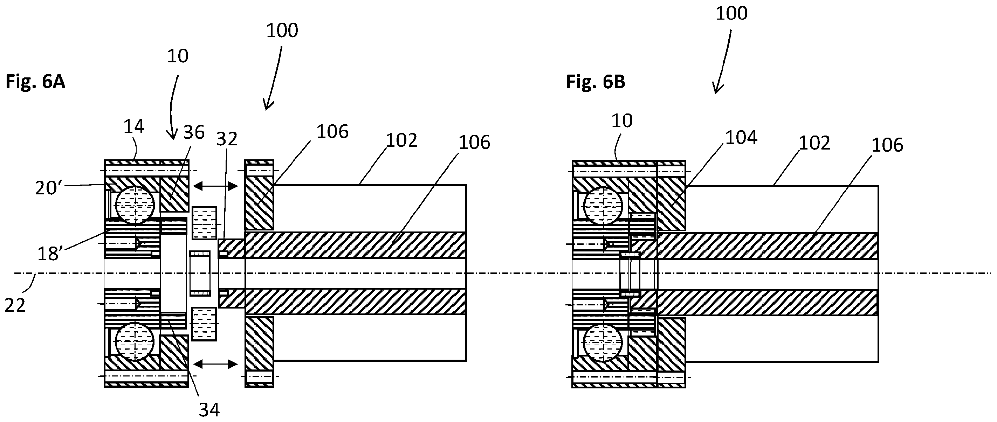

Figs. 6A and 6B illustrate schematic representations of an embodiment of an electric motor arrangement 100 having, aligned on a common central axis, an electric motor 102 having a housing or stator 104 and a rotor 106, and on its output side a harmonic wave reduction and bearing assembly 10 according to a fifth embodiment. In this case, the function of the input side radial bearing is taken over by a radial bearing (not shown) of the electric motor itself. **In** all other respects, the setup of harmonic wave reduction and bearing assembly 10 is similar to the first embodiment shown in Figs. 1A to 1C. **In** this way, the rotary output of electric motor 102 is immediately stepped down and torque increased in a compact design.

**In** all of the embodiments, the bearings 12, 12', 14, 14' are of the radial bearing type. **It** is understood that the bearings may also be of a radiaxial type in which the bearings will take up radial as well as axial stresses, depending on the intended use of the harmonic wave reduction and bearing assembly. Furthermore, the reduction stages 30, 30' are of a type having a radial harmonic wave motion pattern of the rolling elements 38, but they may equally be of an axial or oblique type, such as are disclosed, for instance, in EP 3 366 937 A1.

### List of References

- 10, 10': harmonic wave reduction and bearing assembly
- 11, 11': multi stage harmonic wave reduction and bearing assembly
- 12, 12': input side radial bearing
- 14, 14': output side radial bearing
- 16: rolling element
- 18, 18': inner bearing ring
- 20, 20': outer bearing ring
- 22: central axis
- 30, 30': harmonic wave reduction stage
- 32, 32': inner reduction stage ring
- 33: first race surface
- 33A: peak
- 33B: valley
- 34, 34': central reduction stage ring
- 35: channel
- 36, 36': outer reduction stage ring
- 37: second race surface
- 37A: separator
- 37B: groove
- 38: rolling elements
- 40: seal
- 100: electric motor arrangement
- 102: electric motor
- 104: housing
- 106: rotor
- i: gear ratio
- nR: number of rolling elements

## Claims

1. Harmonic wave reduction and bearing assembly (10, 10'; 11, 11'), comprising an input side radial or radiaxial bearing (12, 12') and an output side radial or radiaxial bearing (14, 14') in axial alignment with the input side bearing (12, 12') on a common central axis (22), the input side bearing (12, 12') and the output side bearing (14, 14') each having a plurality of rolling elements (16) positioned between an outer bearing ring and an inner bearing ring, the assembly (10, 10'; 11, 11') further comprising a harmonic wave reduction stage (30, 30') located axially in between the input side bearing (12, 12') and the output side bearing (14, 14'), the reduction stage (30, 30') performing a wave-type reduction action and having an inner reduction stage ring (32), a central reduction stage ring (34) and an outer reduction stage ring (36) that are concentric with each other as well as with the input side bearing (12, 12') and the output side bearing (14, 14'), wherein the inner reduction stage ring (32) rotates with the inner bearing ring (18) of the input side bearing (12, 12'), the central reduction stage ring (34) rotates with the inner bearing ring (18') of the output side bearing (14, 14') and the outer reduction stage ring (36) is coupled to the outer bearing rings (20, 20') of both the input side bearing (12, 12') and the output side bearing (14, 14'), **characterized in that** the inner reduction stage ring (32) and the outer reduction stage ring (36) are formed as extensions of the inner bearing ring (18) and the outer bearing ring (20) of the input side bearing (12, 12'), respectively, and the central reduction stage ring (34) is formed as an extension of the inner bearing ring (18') of the output side bearing (14, 14'), wherein the extensions of the inner and outer bearing rings (18, 20) of the input side bearing (12, 12') and the inner bearing ring (18') of the output side bearing (14, 14') radially mesh with each other to form the reduction stage (30, 30').

2. The harmonic wave reduction and bearing assembly (10, 10'; 11, 11') of claim 1, wherein the inner reduction stage ring (32) has a first race surface (33) having one or more peaks (33A) and the outer reduction stage ring (36) has a second race surface (37) facing the first race surface (33) and having a plurality of grooves (37B), the number of grooves (37B) being greater than the number of peaks (33A), wherein the central reduction stage ring (34) has structures defining a plurality of channels (35) containing rolling elements (38) held movable in the direction of the channel (35) and in contact with both the first race surface (33) and the second race surface (37), wherein the number of channels (35) in the central reduction stage ring (34) equals the difference between the number of grooves (37B) and the number of peaks (33A).

3. The harmonic wave reduction and bearing assembly (10, 10'; 11, 11') of claim 2, wherein the first race surface (33), the second race surface (37) and the channels (35) are oriented such that, when in action, the rolling elements (38) follow a radially oriented harmonic wave pattern, an axially oriented harmonic wave pattern or a radiaxially oriented harmonic wave pattern tilted at an oblique angle with respect to both the radial and the axial orientations.

4. The harmonic wave reduction and bearing assembly (10, 10'; 11, 11') of one of claims 1 to 3, wherein the input side bearing (12, 12'), the reduction stage (30, 30') and the output side bearing (14, 14') are housed in a shared outer bearing ring (20).

5. The harmonic wave reduction and bearing assembly (11, 11') of one of claims 1 to 4, the assembly (11, 11') having two or more reduction stages (30, 30') coupled to each other in series from an input side reduction stage (30) to an output side reduction stage (30'), each reduction stage (30, 30') being sandwiched between an input side bearing (12, 12') and an output side bearing (14, 14'), the coupling in series being realized such that, in a pair of coupled reduction stages (30, 30'), the central ring (34) of an inputward reduction stage (30) of the pair drives the inner ring (32) of an outputward reduction stage (30') of the pair.

6. The harmonic wave reduction and bearing assembly (11, 11') of claim 5, wherein adjacent reduction stages (30, 30') of the pair share a common bearing (14/12') between each other.

7. Electric motor arrangement (100) comprising an electric motor (102) and a harmonic wave reduction and bearing assembly (10, 10'; 11, 11') according to one of claims 1 to 6, wherein the outer bearing ring (20) of an input side radial or radiaxial bearing (12) of the harmonic wave reduction and bearing assembly (10, 10'; 11, 11') is connected with a housing (104) or a stator of the electric motor (102) and the inner bearing ring (18) of the input side bearing (12) is connected to a rotor (106) of the electric motor (102).

8. The electric motor arrangement (100) of claim 7, wherein a radial or radiaxial bearing of the electric motor (102) is at the same time the input side bearing (12) of the harmonic wave reduction and bearing assembly (10, 10'; 11, 11') connected to the electric motor (102).

## Patentansprüche

1. Harmonische Untersetzungs- und Lageranordnung (10, 10'; 11, 11'), umfassend ein eingangsseitiges Radial- oder Radial-Axial-Wälzlager (12, 12') und ein ausgangsseitiges Radial- oder Radial-Axial-Wälzager (14, 14'), das axial mit dem eingangsseitigen Wälzlager (12, 12') auf einer gemeinsamen Mittelachse (22) ausgerichtet ist, wobei das eingangsseitige Wälzlager (12, 12') und das ausgangsseitige Wälzlager (14, 14') jeweils eine Vielzahl von Wälzkörpern (16) aufweisen, die zwischen einem äußeren Lagerring und einem inneren Lagerring angeordnet sind, wobei die Anordnung (10, 10'; 11, 11') ferner eine harmonische Untersetzungsstufe (30, 30') umfasst, die axial zwischen dem eingangsseitigen Wälzlager (12, 12') und dem ausgangsseitigen Wälzager (14, 14') angeordnet ist, wobei die Untersetzungsstufe (30, 30') eine wellenartige Untersetzungswirkung ausübt und einen inneren Untersetzungsstufenring (32), einen mittleren Untersetzungsstufenring (34) und einen äußeren Untersetzungsstufenring (36) aufweist, die sowohl zueinander als auch zum eingangsseitigen Wälzlager (12, 12') und dem ausgangsseitigen Wälzlager (14, 14') konzentrisch sind, wobei der innere Untersetzungsstufenring (32) sich mit dem inneren Lagerring (18) des antriebsseitigen Wälzlagers (12, 12') dreht, der mittlere Untersetzungsstufenring (34) sich mit dem inneren Lagerring (18') des ausgangsseitigen Wälzlagers (14, 14') dreht und der äußere Untersetzungsstufenring (36) mit den äußeren Lagerringen (20, 20') sowohl des eingangsseitigen Wälzlagers (12, 12') als auch des ausgangsseitigen Wälzlagers (14, 14') gekoppelt ist, **dadurch gekennzeichnet, dass** der innere Untersetzungsstufenring (32) und der äußere Untersetzungsstufenring (36) als Verlängerungen des inneren Lagerrings (18) bzw. des äußeren Lagerrings (20) des eingangsseitigen Wälzlagers (12, 12') ausgebildet sind und der mittlere Untersetzungsstufenring (34) als Verlängerung des inneren Lagerrings (18') des ausgangsseitigen Wälzlagers (14, 14') ausgebildet ist, wobei die Verlängerungen des inneren und des äußeren Lagerrings (18, 20) des eingangsseitigen Wälzlagers (12, 12') und des inneren Lagerrings (18') des ausgangsseitigen Wälzlagers (14, 14') radial ineinandergreifen, um die Untersetzungsstufe (30, 30') zu bilden.

2. Die harmonische Untersetzungs- und Lageranordnung (10, 10'; 11, 11') nach Anspruch 1, wobei der innere Untersetzungsstufenring (32) eine erste Laufbahnoberfläche (33) mit einer oder mehreren Erhebungen (33A) aufweist und der äußere Untersetzungsstufenring (36) eine zweite Laufbahnoberfläche (37) aufweist, die der ersten Laufbahnoberfläche (33) gegenüberliegt und eine Vielzahl von Nuten (37B) aufweist, wobei die Anzahl der Nuten (37B) größer ist als die Anzahl der Erhebungen (33A), wobei der mittlere Untersetzungsstufenring (34) Strukturen aufweist, die eine Vielzahl von Kanälen (35) definieren, die Wälzkörper (38) enthalten, die in Richtung des Kanals (35) beweglich gehalten sind und sowohl mit der ersten Laufbahnoberfläche (33) als auch mit der zweiten Laufbahnoberfläche (37) in Kontakt stehen, wobei die Anzahl der Kanäle (35) im mittleren Untersetzungsstufenring (34) der Differenz zwischen der Anzahl der Nuten (37B) und der Anzahl der Erhebungen (33A) entspricht.

3. Die harmonische Untersetzungs- und Lageranordnung (10, 10'; 11, 11') nach Anspruch 2, wobei die erste Laufbahnoberfläche (33), die zweite Laufbahnoberfläche (37) und die Kanäle (35) so ausgerichtet sind, dass die Wälzkörper (38) im Betrieb einem radial ausgerichteten harmonischen Wellenmuster, einem axial ausgerichteten harmonischen Wellenmuster oder einem radial-axial ausgerichteten harmonischen Wellenmuster folgen, das in Bezug auf die radiale und die axiale Ausrichtung in einem schrägen Winkel geneigt ist.

4. Die harmonische Untersetzungs- und Lageranordnung (10, 10'; 11, 11') nach einem der Ansprüche 1 bis 3, wobei das eingangsseitige Wälzlager (12, 12'), die Untersetzungsstufe (30, 30') und das ausgangsseitige Wälzlager (14, 14') in einem gemeinsamen äußeren Lagerring (20) untergebracht sind.

5. Die harmonische Untersetzungs- und Lageranordnung (11, 11') gemäß einem der Ansprüche 1 bis 4, wobei die Baugruppe (11, 11') zwei oder mehr Untersetzungsstufen (30, 30') aufweist, die von einer eingangsseitigen Untersetzungsstufe (30) zu einer ausgangsseitigen Untersetzungsstufe (30') in Reihe miteinander gekoppelt sind, wobei jede Untersetzungsstufe (30, 30') zwischen einem eingangsseitigen Wälzlager (12, 12') und einem ausgangsseitigen Wälzlager (14, 14') angeordnet ist, wobei die Reihenschaltung so realisiert ist, dass in einem Paar gekoppelter Untersetzungsstufen (30, 30') der Mittelring (34) einer eingangsseitigen Untersetzungsstufe (30) des Paares den Innenring (32) einer ausgangsseitigen Untersetzungsstufe (30') des Paares antreibt.

6. Die harmonische Untersetzungs- und Lageranordnung (11, 11') nach Anspruch 5, wobei benachbarte Untersetzungsstufen (30, 30') des Paares ein gemeinsames Wälzlager (14/12') zwischen sich teilen.

7. Elektromotoranordnung (100) mit einem Elektromotor (102) und einer harmonischen Untersetzungs- und Lageranordnung (10, 10'; 11, 11') gemäß einem der Ansprüche 1 bis 6, wobei der äußere Lagerring (20) eines eingangsseitigen Radial- oder Radial-Axial-Wälzlagers (12) der harmonischen Untersetzungs- und Lageranordnung (10, 10'; 11, 11') mit einem Gehäuse (104) oder einem Stator des Elektromotors (102) verbunden ist und der innere Lagerring (18) des eingangsseitigen Wälzlagers (12) mit einem Rotor (106) des Elektromotors (102) verbunden ist.

8. Elektromotoranordnung (100) nach Anspruch 7, wobei ein Radial- oder Radial-Axial-Lager des Elektromotors (102) gleichzeitig das eingangsseitige Wälzlager (12) der mit dem Elektromotor (102) verbundenen harmonischen Untersetzungs- und Lageranordnung (10, 10'; 11, 11') ist.

## Revendications

1. Ensemble (10, 10' ; 11, 11') de roulements et de réduction des ondes harmoniques, comprenant un roulement radial ou radiaxial côté entrée (12, 12') et un roulement radial ou radiaxial côté sortie (14, 14') aligné axialement avec le roulement côté entrée (12, 12') sur un axe central commun (22), le roulement côté entrée (12, 12') et le roulement côté sortie (14, 14') présentant chacun une pluralité d'éléments roulants (16) positionnés entre un anneau de roulement extérieur et un anneau de roulement intérieur, l'ensemble (10, 10' ; 11, 11') comprenant en outre un étage de réduction d'ondes harmoniques (30, 30') situé axialement entre le roulement côté entrée (12, 12') et le roulement côté sortie (14, 14'), l'étage de réduction (30, 30') effectuant une action de réduction de type ondulatoire et présentant un anneau intérieur (32) d'étage de réduction, un anneau central (34) d'étage de réduction et un anneau extérieur (36) d'étage de réduction qui sont concentriques entre eux ainsi qu'avec le roulement côté entrée (12, 12') et le roulement côté sortie (14, 14'), l'anneau intérieur (32) d'étage de réduction tournant avec l'anneau de roulement intérieur (18) du roulement côté entrée (12, 12'), l'anneau central (34) d'étage de réduction tournant avec l'anneau de roulement intérieur (18') du roulement côté sortie (14, 14') et l'anneau extérieur (36) d'étage de réduction étant relié aux anneaux de roulement extérieurs (20, 20') du roulement côté entrée (12, 12') et du roulement côté sortie (14, 14'), **caractérisé en ce que** l'anneau intérieur (32) d'étage de réduction et l'anneau extérieur (36) d'étage de réduction sont respectivement sous la forme d'extensions de l'anneau de roulement intérieur (18) et de l'anneau de roulement extérieur (20) du roulement côté entrée (12, 12'), et l'anneau central (34) d'étage de réduction est sous la forme d'une extension de l'anneau de roulement intérieur (18') du roulement côté sortie (14, 14'), les extensions des anneaux de roulement intérieur et extérieur (18, 20) du roulement côté entrée (12, 12') et l'anneau de roulement intérieur (18') du roulement côté sortie (14, 14') étant mutuellement en engrènement radialement de façon à former l'étage de réduction (30, 30').

2. L'ensemble (10, 10' ; 11, 11') de roulements et de réduction des ondes harmoniques selon la revendication 1, dans lequel l'anneau intérieur (32) d'étage de réduction présente une première surface de circulation (33) présentant une ou plusieurs crêtes (33A) et l'anneau extérieur (36) d'étage de réduction présente une deuxième surface de circulation (37) tournée vers la première surface de circulation (33) et présentant une pluralité de rainures (37B), le nombre de rainures (37B) étant supérieur au nombre de crêtes (33A), l'anneau central (34) d'étage de réduction présentant des structures définissant une pluralité de canaux (35) contenant des éléments roulants (38) maintenus mobiles dans la direction du canal (35) et en contact à la fois avec la première surface de circulation (33) et la deuxième surface de circulation (37), le nombre de canaux (35) dans l'anneau central (34) d'étage de réduction étant égal à la différence entre le nombre de rainures (37B) et le nombre de crêtes (33A).

3. L'ensemble (10, 10' ; 11, 11') de roulements et de réduction des ondes harmoniques selon la revendication 2, dans lequel la première surface de circulation (33), la deuxième surface de circulation (37) et les canaux (35) sont orientés de telle sorte que, lorsqu'ils sont en action, les éléments roulants (38) suivent un motif d'ondes harmoniques orienté radialement, un motif d'ondes harmoniques orienté axialement ou un motif d'ondes harmoniques orienté radialement et axialement, incliné selon un angle oblique par rapport aux orientations radiale et axiale.

4. L'ensemble (10, 10' ; 11, 11') de roulements et de réduction des ondes harmoniques selon l'une des revendications 1 à 3, dans lequel le roulement côté entrée (12, 12'), l'étage de réduction (30, 30') et le roulement côté sortie (14, 14') sont logés dans un anneau extérieur de roulement (20) commun.

5. L'ensemble (10, 10' ; 11, 11') de roulements et de réduction des ondes harmoniques selon l'une des revendications 1 à 4, l'ensemble (11, 11') présentant deux étages de réduction, ou plus de deux étages de réduction (30, 30') reliés en série les uns aux autres, depuis un étage de réduction côté entrée (30) jusqu'à un étage de réduction côté sortie (30'), chaque étage de réduction (30, 30') étant pris en sandwich entre un roulement côté entrée (12, 12') et un roulement côté sortie (14, 14'), la liaison en série étant réalisée de telle sorte que, dans une paire d'étages de réduction (30, 30') reliés, l'anneau central (34) d'un étage de réduction côté entrée (30) de la paire entraîne l'anneau intérieur (32) d'un étage de réduction côté sortie (30') de la paire.

6. L'ensemble (11, 11') de roulements et de réduction des ondes harmoniques selon la revendication 5, dans lequel les étages de réduction adjacents (30, 30') de la paire partagent un roulement commun (14/12') entre eux.

7. Agencement (100) formant moteur électrique, comprenant un moteur électrique (102) et un ensemble (10, 10' ; 11, 11') de roulements et de réduction des ondes harmoniques selon l'une des revendications 1 à 6, dans lequel l'anneau de roulement extérieur (20) d'un roulement radial ou radiaxial côté entrée (12) de l'ensemble (10, 10' ; 11, 11') de roulements et de réduction des ondes harmoniques est relié à un boîtier (104) ou à un stator du moteur électrique (102) et l'anneau de roulement intérieur (18) du roulement côté entrée (12) est relié à un rotor (106) du moteur électrique (102).

8. L'agencement (100) formant moteur électrique selon la revendication 7, dans lequel un roulement radial ou radiaxial du moteur électrique (102) est en même temps le roulement côté entrée (12) de l'ensemble (10, 10' ; 11, 11') de roulements et de réduction des ondes harmoniques relié au moteur électrique (102).
